# EUROPEAN PATENT SPECIFICATION

(11) **EP 2 807 401 B1**
(45) Date of publication and mention of the grant of the patent: **01.03.2017**
(21) Application number: 12779034.3
(22) Date of filing: 24.10.2012
(51) Int. Cl.: F16G 11/08, B65H 69/02, D07B 1/00, F16G 11/00, F16G 11/02

(54) **CHINESE FINGER AND OUTER LAYER REMOVED FROM CORD**
SEILSTRUMPFS UND VON EINER KORDEL ENTFERNTE ÄUSSERE SCHICHT
DOIGTIER JAPONAIS ET COUCHE EXTERNE SUPPRIMÉE DE LA CORDE

(30) Priority: 26.01.2012 EP 12152655
(43) Date of publication of application: 03.12.2014
(73) Proprietor: NV Bekaert SA, 8550 Zwevegem (BE)
(72) Inventor: ONISHCHENKO, Sergey, Matyrsky Lipetsk Region 398908 (RU)
(74) Representative: Messely, Marc
(86) International application number: PCT/EP2012/071027
(87) International publication number: WO 2013/110362

(56) References cited:
- US-A- 161 508
- US-A- 2 435 284
- US-A- 2 596 513
- US-A- 3 047 652

## Description

### Technical Field

The invention relates to a tubular fabric for connecting two steel cords, and an assembly of two steel cords and a tubular fabric for connecting said steel cords at two connecting ends. The invention further relates to a method of connecting two steel cords at two connecting ends by means of a tubular fabric.

### Background Art

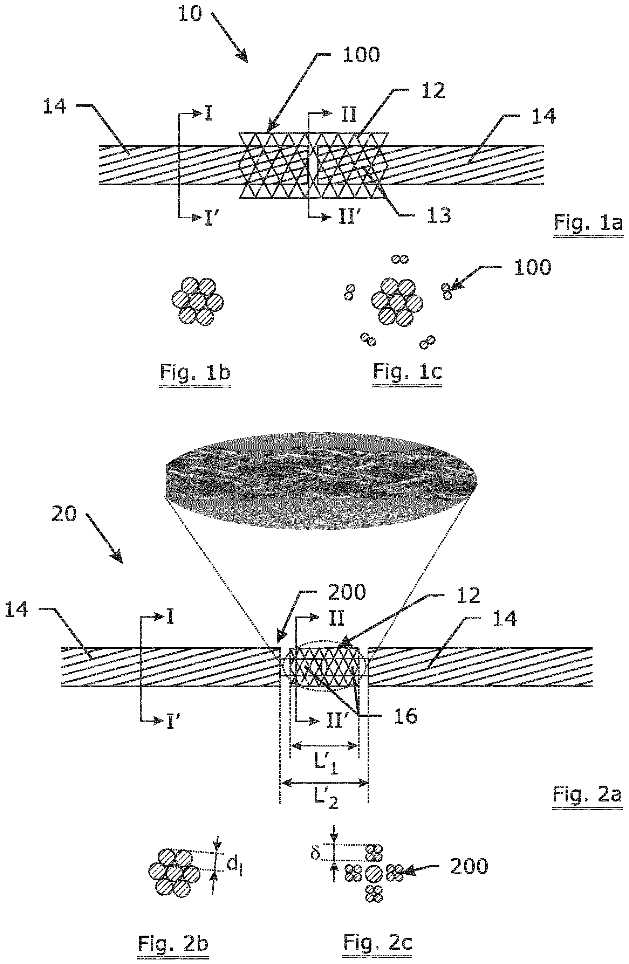

A tubular fabric for connecting two steel cords is known in the art and is sometimes referred to as a "Chinese finger". The assembly 10 of Chinese finger 100 and steel cords 14 is shown in Figures 1a, 1b and 1c. Figure 1a shows a longitudinal view, Figure 1b a cross-section according to plane I-I and Figure 1c a cross-section according to plane II-II. Chinese finger 100 is composed of metal threads or wires 12 helically interwoven or braided to form a cylindrical braiding. Between adjacent successive threads 12 in the axial direction and in the peripheral direction, are spaces 13. The resulting network of lozenges is very flexible and facilitates radial expansion and contraction of the tubular fabric when it is positioned on the ends of two steel cords and contraction and gripping of those ends when the joined cords are subjected to forces tending to pull the cords from one another. The general purpose is to use such a tubular fabric or Chinese finger to connect two steel cords each time there is a fracture during twisting.

GB 1462 735 disclosed a tubular fabric which was similar to that shown in Figure 1 a except that the braiding formed by the metal threads or wires were embedded in a rubber cylindrical body. This cylindrical body naturally filled the spaces between the metal threads or wires. However, because of the elastomeric cylindrical body, it might be insufficient to subject the tubular fabric to a slight axial compression to make it expand radially and allow it to be positioned easily on the ends of two steel cords which are to be connected.

Besides, an assembly of two steel cords connected by such a tubular fabric or by hitherto known tubular fabrics has a quite visible disadvantage that the diameter increases over the length of the tubular fabric. In case it is desirable to have continuous cords available by such assemblies, this diameter increase might have difficulties in the subsequent operations of such cords, e.g. guiding the cords through a steelastic installation when rubberising of such cords.

US 2596 513 also disclosed a coupling or joint of a Chinese finger, the two connecting ends of the belt may be cut down to form a shoulder and cylindrical end portions which permit the coupling to surround these end portions and still not enlarge the resulting diameter substantially beyond that of the belt. Of course, it also described that for the belt of a rope or the like, when the diameter is so small that the paring down of the belt ends to accommodate the coupling is not desirable and a slight increase in diameter will not be detrimental. On one hand, indeed it disclosed a method to avoid a substantial increase in diameter; on the other hand, for a belt of the rope or the like, e.g. steel cord, as the diameter of the filaments is too small to be cut down, it may have undesirable results in operation, e.g. at a high risk of fracture. Thus, it is not a preferable way to avoid the diameter increasing of the joint part in case of the use of the coupling on a belt of steel cord or the like.

Another example of a coupling is disclosed in US2435284.

### Disclosure of Invention

The primary object of the invention is to mitigate drawbacks of the prior arts.

The further object of the invention is to decrease the diameter over the length of the tubular fabric.

The another object of the invention is to increase tensile strength at level of fracture.

According a first aspect of the invention, there is provided an assembly of two steel cords and a tubular fabric for connecting the steel cords at two connecting ends. The steel cords are multi-layer steel cords having a core and at least one layer and possibly a wrapping filament, e.g. a core of one filament or a plurality of filaments and one layer or two or more layers with a plurality of filaments of each layer twisted around the core, further a wrapping filament may be wrapped around the outer layer of such steel cords.

At least one layer is absent at the two connecting ends of said steel cords over a total length L₂. The tubular fabric is positioned so that it fits within the total length L₂ thereby avoiding an increase in diameter of the steel cords with twice the wall thickness of the tubular fabric over this length L₂.

Preferably, the tubular fabric of the assembly according to the invention has a particular length L₁ ranging from 0.5 cm to 20 cm, e.g. 1 cm to 3 cm or 5 cm to 10 cm. If the length L₁ is shorter than 0.5 cm, it would not sufficient to subject the tubular fabric to provide a strong connection of the two ends of the cords, which would easily cause tensile strength decreasing at level of fracture. If the length L₁ is longer than 20 cm, it would be a waste of material and a longer tubular fabric can not facilitate their positioning over the two ends of the cords to be connected. The tubular fabric with a particular length L₁ is positioned so that it fits within the total length L₂, L₁ and L₂ preferably satisfy the expression L₁ ≤ L₂.

The tubular fabric has a wall thickness *δ* while at least one layer of the multi-layer steel cord has filaments with a maximum diameter of d_{ℓ}, which means that the absence of said at least one layer results in a thickness decrease of 2xd_{ℓ} over a length L₂ while further positioning of said tubular fabric is resulting in a thickness increase of 2x*δ* over a length L₁. That's to say, the global effect on the joint part of such an assembly according to the invention is 2x*δ* - 2xd_{ℓ} over a length L₁. 2x*δ* - 2xd_{ℓ} can either be positive or negtive in order to avoid an increase in diameter over the length L₂. If 2x*δ* - 2xd_{ℓ} is positive, the total diameter of the joint part will be a little bit larger than the diameter of the other parts of said steel cord but still much smaller than the sum of the 2x*δ* + 2xd_{ℓ} in case there is no removal of any layers of the steel cord. If 2x*δ* - 2xd_{ℓ} is negative, the total diameter of the joint part is much smaller than the other parts of the steel cord, which has a significant improvement of avoiding an increase in diameter over the length L₂.

In a particular embodiment, the multi-layer steel cord comprises a core and an inner layer twisted around the core and further an outer layer twisted around the inner layer, e.g.1+6+12 or 3+9+15 multi-layer steel cord construction with a core filament and an inner layer of six filaments twisted around the core filament and twelve filaments as an outer layer further twisted around the inner layer. Possibly, there is a wrapping filament wrapped around the outer layer, this is then referred to as 1+6+12 +1 or 3+9+15 +1.

In this particular embodiment, the outer layer or both of the outer layer and the wrapping filament is/are removed at the two connecting ends, e.g. for a multi-layer steel cord construction with a wrapping filament 3+9+15 +1, the outer layer of fifteen filaments or both of the fifteen filaments and the wrapping filament is/are removed at the two connecting ends resulting in a reduction of the diameter at the two connecting ends.

Thus, the two connecting ends will have a decreased diameter because of the absence of the outer layer or both of the outer layer and the wrapping filament at the two connecting ends of the steel cords. This would further avoid an increase in diameter when the tubular fabric is put over both steel cord ends.

Alternatively, the two connecting ends will have a decreased diameter because of the absence of the inner layer or both of the inner layer and the core at the two connecting ends of the steel cords, e.g. for a multi-layer steel cord construction with a wrapping filament 1+6+12 +1, the inner layer of six filaments or both of the core filament and the inner layer of six filaments is/are removed at the two connecting ends. This would further avoid an increase in diameter when the tubular fabric is put over both steel cord ends.

The remaining filaments of each connecting end may be heated by electrical resistance and overtwisted together in order to be further connected by the tubular fabric to form an assembly according to the invention. The heating may be effected by various simple means such as a heating press or gripper with jaws gripping and encompassing the two connecting ends.

The assembly of the invention, preferably, the two ends of the tubular fabric are soldered to the exterior filaments of the steel cords in order to obtain a sufficiently high breaking strength of the joint part and allow proper tensioning of the assembly. A solder has proven to provide a stronger bonding than an adhesive resin. Moreover, a solder is to be preferred above a weld, since welding may make the assembly too brittle.

According a second aspect of this invention, a method of connecting two steel cords at two connecting ends by means of a tubular fabric is provided. The method comprises the steps:
- removing at least one layer at the two connecting ends of the two steel cords;
- connecting the two ends by means of a tubular fabric.

According a third aspect of this invention, a method of connecting two steel cords at two connecting ends by means of a tubular fabric is provided, the method comprises the steps:
- connecting the two ends by means of a tubular fabric resulting in a connected assembly;
- wrapping the connected assembly by means of a wrapping filament thereby avoiding to wrap on top of the tubular fabric.

### Brief Description of Figures in the Drawings

Figure 1 a is an axial section of a known assembly of two steel cords connecting by a known connector tubular fabric according to the prior art.
   Figure 1b a cross-section according to plane I-I in Figure 1 a.
   Figure 1c a cross-section according to plane II-II in Figure 1 a.
Figure 2a shows an axial section of a first preferred embodiment of the invention.
   Figure 2b a cross-section according to plane I-I in Figure 2a.
   Figure 2c a cross-section according to plane II-II in Figure 2a.
Figure 3a shows an axial section of a second preferred embodiment of the invention.
   Figure 3b a cross-section according to plane I-I in Figure 3a.
   Figure 3c a cross-section according to plane II-II in Figure 3a.
Figure 4a shows an axial section of a third preferred embodiment of the invention.
   Figure 4b a cross-section according to plane I-I in Figure 4a.
   Figure 4c a cross-section according to plane II-II in Figure 4a.

### Mode(s) for Carrying Out the Invention

Fractures of a steel cord may happen during the twisting process. However, it is desirable to have continuous cords with long lengths available so as to obtain uniform continuous reinforcing elements. Having long lengths of equal diameter avoids difficulties during the rubberising of the cords. Especially for the joint part, which is the part where two steel cords are joined together, it is desirable to have a strong connection as well as an equal diameter or a minimized change in diameter.

The known assembly 10 shown in Figure 1 a is composed of two steel cords 14 connected by a known connector tubular fabric 100. The diameter (a radial thickness) of the assembly over the length of the tubular fabric is equal to the sum of diameter of the steel cord itself and the radial thickness of the tubular fabric. So there is a substantial increase in diameter.

There may be different embodiments of the connector tubular fabric or the Chinese finger, but two specific examples are: One with sixteen filaments with a diameter of 0.11 cm illustrated as the tubular fabric 100 and one with thirty-two filaments with a diameter of 0.09 cm illustrated as the tubular fabric 200. The tensile strength of the filaments of the two Chinese fingers is preferred to be ultra tensile strength, which means at least 3800 MPa.

A first preferred embodiment 20 according to the invention and shown in Figure 2a is similar to that shown in Figure 1 a except that at the two connecting ends 16 of the steel cords 14 the six filaments of the outer layer are absent over a total length L₂^{'} as can be seen from a comparison of cross-sections Fig. 2b and Fig. 2c. This means that the tubular fabric 200 with a particular length L₁^{'} when positioned and fitting within the total length L₂^{'} of one core filament does not increase the diameter, at least not over the length L₂^{'}.

Removal of the outer layer filaments at the two connecting ends of the two steel cords is done manually and with appropriate cutting means, e.g. by means of a pair of pliers. Further, in order to avoid the filaments at the cutting point becoming loose, they are connected to the rest of the steel cord by means of solder.

After that, the two ends of tubular fabric are soldered to the exterior filaments of the steel cords in order to increase tensile strength at level of fracture. If the two ends of tubular fabric are not soldered to the exterior filaments of the steel cords, the connection of the two ends of the steel cords is bad, which will cause too big a loss of tensile strength at level of fracture.

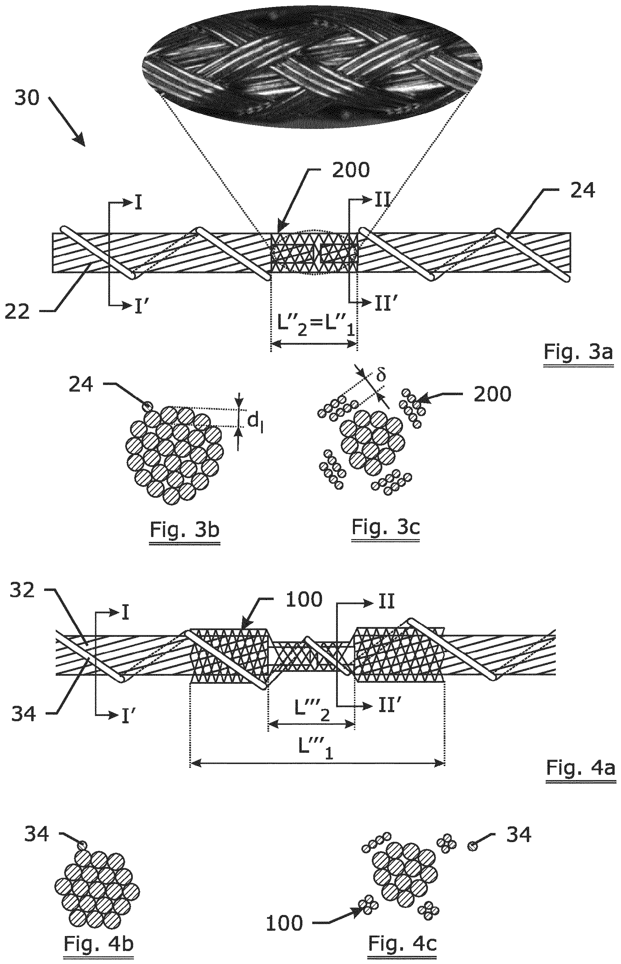

In case the customer wants a steel cord with a wrapping filament 24, e.g. a steel cord 22 with a construction of 3+9+15 +1, a second preferred embodiment 30 shown in Figure 3a illustrates the assembly according to the invention.

At the two connecting ends of the steel cord 22 the fifteen filaments of the outer layer are absent over a total length L2". The tubular fabric 200 with a particular length L1" is positioned and just matches with the total length L2". The result is that the diameter of the assembly over the length L2" decreases significantly compared with the known assembly shown in Figure 1.

Removal of the outer layer filaments at the two connecting ends of the two steel cords is also done manually and with appropriate cutting means, e.g. by means of a pair of pliers. Then the remaining filaments at the two connecting ends of the steel cord - the three core filaments and the inner layer nine filaments - are heated and overtwisted in order to obtain a thinner radial diameter of the ends further to contribute to the diameter decreasing of the assembly over the length L2^{"}. This heating is also done to avoid contact stresses between the cord ends and the Chinese finger thereby leading to an improved breaking load of the connection.

Further, in order to avoid the filaments (the fifteen outer layer filaments) at the cutting point becoming loose, they are connected to the rest of the steel cord by means of solder.

After that, the two ends of tubular fabric are soldered to the exterior filaments of the steel cords in order to increase tensile strength at level of fracture.

Then a wrapping filament 24 is wrapping the steel cord 22 but no wrapping on top of the tubular fabric is done in order to avoid the diameter increasing of the joint part of the assembly.

Alternatively, wrapping may be done over the assembly and the tubular fabric. The drawback is that this increases the diameter, but the advantage is that this continuous wrapping without interruptions strengthens the assembly.

A third embodiment shown in Figure 4 according to the invention is also about an assembly of a tubular fabric 100 for connecting two ends of a steel cord 32 further with a wrapping filament 34, e.g. 1+6+12+1 steel cord construction.

At the two connecting ends of the steel cord 32 the core filament and the six filaments of the inner layer are absent over a total length L₂^{'"}. This means that the tubular fabric with a particular length L₁^{'"} is positioned and partially overlaps with the total length L₂^{'"}. It is quite obvious that the diameter of the assembly over the length L₂^{'"} of the tubular fabric decreases significantly compared with the known assembly shown in Figure 1.

Removal of the core filament and the inner layer filaments at the two connecting ends of the two steel cords is also done manually and with appropriate cutting means, e.g. first untwisting the outer layer, then removing the core filament and the inner layer filaments by means of a pair of pliers, and thereafter twisting again the outer layer filaments.

In order to avoid the filaments (the core filament and the inner layer filaments) at the cutting point becoming loose, they are connected to the rest of the steel cord by means of solder.

The two ends of the steel cord 32 are then connected by means of a tubular fabric resulting in a connected assembly after the two ends of tubular fabric are soldered to the exterior filaments of the steel cords in order to increase tensile strength at level of fracture.

Further, wrapping the connected assembly by means of a wrapping filament 34 on top of the tubular fabric as shown in Figure 4 is done.

It is to be understood that the invention is not limited to the assemblies of the embodiments above, but that it may also be applied to assemblies comprising a tubular fabric for connecting two ends of a steel cord or steel cords with a non-increasing diameter over the length of the tubular fabric.

## Claims

1. An assembly (20) of two steel cords (14) and a tubular fabric (200) for connecting said steel cords (14) at two connecting ends,
said steel cords (14) being a multi-layer steel cord having a core and at least one layer and possibly a wrapping filament (24, 34), **characterized in that** at least said one layer is absent at the two connecting ends of said steel cords (14) over a total length L₂, said tubular fabric (200) being positioned so that it covers at least part of said total length L₂ thereby avoiding an increase in diameter of the steel cords (14) with twice the wall thickness of the tubular fabric (200) over the length L₂.

2. An assembly (20) according to Claim 1, wherein said tubular fabric (200) has a particular length L₁ ranging from 0.5 cm to 20 cm.

3. An assembly (20) according to Claim 2, wherein L₁ is smaller or equal to L₂.

4. An assembly (20) according to claim 3, wherein said tubular fabric (200) has a wall thickness δ and wherein said at least one layer has filaments with a maximum diameter of dₗ, the absence of said at least one layer resulting in a thickness decrease of 2xdₗ over a length L₂, the positioning of said tubular fabric (200) resulting in a thickness increase of 2xδ over a length L₁, the global effect being 2xδ - 2xdₗ over a length L₁.

5. An assembly (20) according to claim 4, wherein 2xδ - 2xdₗ is positive.

6. An assembly (20) according to claim 4, wherein 2xδ - 2xdₗ is negative.

7. An assembly (20) according to Claim 1, wherein said multi-layer steel cord (14) comprises a core and an inner layer twisted around the core and further an outer layer twisted around said inner layer and then the wrapping filament (24, 34).

8. An assembly (20) according to Claim 7, wherein said multi-layer steel cord (14) comprises a core of three filaments and an inner layer of nine filaments twisted around the core and further an outer layer of fifteen filaments twisted around and then a further wrapping filament.

9. An assembly (20) according to Claim 7, wherein said multi-layer steel cord (14) comprises a core of only one filament and an inner layer of six filaments twisted around the core and further an outer layer of twelve filaments twisted around and then a further wrapping filament (24, 34).

10. An assembly (20) according to Claim 7, wherein the outer layer or both of the outer layer and the wrapping filament is/are removed at the two connecting ends.

11. An assembly (20) according to Claim 7, wherein the inner layer or both of the core and the inner layer is/are removed at the two connecting ends.

12. An assembly (20) according to Claim 10 or 11, wherein the remaining filaments of each connecting end may be heated by electrical resistance and overtwisted together.

13. An assembly (20) according to any one of Claim 1 to 12, wherein the two ends of said tubular fabric are soldered to the exterior filaments of the steel cords.

14. A method of connecting two multi-layer steel cords (14) at two connecting ends by means of a tubular fabric (200), said method comprising the steps:
- removing at least one layer at the two connecting ends of the two steel cords;
- Heating the remaining filaments and overtwisting said remaining filaments together;
- connecting the two ends by means of a tubular fabric.

15. The method according to claim 14 wherein said heating of the remaining filaments is performed by means of electrical resistance heating.

16. The method according to claim 14, said method additionally comprising the step of:
- wrapping the connected assembly by means of a wrapping filament (24, 34) thereby avoiding to wrap on top of the tubular fabric.

## Patentansprüche

1. Baugruppe (20) aus zwei Stahlseilen (14) und einem schlauchförmigen Gewebe (200) zum Verbinden der Stahlseile (14) an zwei Verbindungsenden,
wobei die Stahlseile (14) mehrschichtige Stahlseile mit einem Kern und wenigstens einer Schicht und möglichst einem Umhüllungsfilament (24, 34) sind, **dadurch gekennzeichnet, dass** wenigstens eine Schicht an den beiden Verbindungsenden der Stahlseile (14) über eine Gesamtlänge L₂ nicht vorhanden ist, wobei das schlauchförmige Gewebe (200) so angeordnet ist, dass es wenigstens einen Teil der Gesamtlänge L₂ bedeckt, um so eine Zunahme des Durchmessers der Stahlseile (14) um zweimal die Wanddicke des schlauchförmigen Gewebes (200) über die Länge L₂ zu vermeiden.

2. Baugruppe (20) gemäß Anspruch 1, wobei das schlauchförmige Gewebe (200) eine besondere Länge L₁ in dem Bereich von 0,5 cm bis 20 cm aufweist.

3. Baugruppe (20) gemäß Anspruch 2, wobei L₁ kleiner als oder gleich L₂ ist.

4. Baugruppe (20) gemäß Anspruch 3, wobei das schlauchförmige Gewebe (200) eine Wanddicke δ aufweist und wobei die wenigstens eine Schicht Filamente mit einem Maximaldurchmesser von dₗ aufweist, wobei das Fehlen der wenigstens einen Schicht zu einer Dickenabnahme von 2xdₗ über eine Länge L₂ führt, wobei das Positionieren des schlauchförmigen Gewebes (200) zu einer Dickenzunahme von 2xδ über eine Länge L₁ führt, wobei die Gesamtwirkung 2xδ - 2xdₗ über eine Länge L₁ beträgt.

5. Baugruppe (20) gemäß Anspruch 4, wobei 2xδ - 2xdₗ positiv ist.

6. Baugruppe (20) gemäß Anspruch 4, wobei 2xδ - 2xdₗ negativ ist.

7. Baugruppe (20) gemäß Anspruch 1, wobei das mehrschichtige Stahlseil (14) einen Kern und eine innere Schicht, die um den Kern gewunden ist, und ferner eine äußere Schicht, die um die innere Schicht gewunden ist, und dann das Umhüllungsfilament (24, 34) umfasst.

8. Baugruppe (20) gemäß Anspruch 7, wobei das mehrschichtige Stahlseil (14) einen Kern aus drei Filamenten und eine innere Schicht aus neun Filamenten, die um den Kern gewunden ist, und ferner eine äußere Schicht aus fünfzehn Filamenten, die um die innere Schicht gewunden ist, und dann ein weiteres Umhüllungsfilament umfasst.

9. Baugruppe (20) gemäß Anspruch 7, wobei das mehrschichtige Stahlseil (14) einen Kern aus nur einem Filament und eine innere Schicht aus sechs Filamenten, die um den Kern gewunden ist, und ferner eine äußere Schicht aus zwölf Filamenten, die um die innere Schicht gewunden ist, und dann ein weiteres Umhüllungsfilament (24, 34) umfasst.

10. Baugruppe (20) gemäß Anspruch 7, wobei die äußere Schicht oder sowohl die äußere Schicht als auch das Umhüllungsfilament an den beiden Verbindungsenden entfernt ist/sind.

11. Baugruppe (20) gemäß Anspruch 7, wobei die innere Schicht oder sowohl der Kern als auch die innere Schicht an den beiden Verbindungsenden entfernt ist/sind.

12. Baugruppe (20) gemäß Anspruch 10 oder 11, wobei die verbleibenden Filamente jedes Verbindungsendes durch elektrischen Widerstand erhitzt und zusammengedrillt werden können.

13. Baugruppe (20) gemäß einem der Ansprüche 1 bis 12, wobei die beiden Enden des schlauchförmigen Gewebes an die äußeren Filamente der Stahlseile gelötet sind.

14. Verfahren zum Verbinden von zwei mehrschichtigen Stahlseilen (14) an zwei Verbindungsenden mithilfe eines schlauchförmigen Gewebes (200), wobei das Verfahren die Schritte umfasst:
- Entfernen wenigstens einer Schicht an den beiden Verbindungsenden der beiden Stahlseile;
- Erhitzen der verbleibenden Filamente und Zusammendrillen der verbleibenden Filamente;
- Verbinden der beiden Enden mithilfe eines schlauchförmigen Gewebes.

15. Verfahren gemäß Anspruch 14, wobei das Erhitzen der verbleibenden Filamente mithilfe von elektrischer Widerstandsheizung durchgeführt wird.

16. Verfahren gemäß Anspruch 14, wobei das Verfahren zusätzlich den Schritt umfasst:
- Umhüllen der verbundenen Baugruppe mithilfe eines Umhüllungsfilaments (24, 34), wobei Umhüllen auf dem schlauchförmigen Gewebe vermieden wird.

## Revendications

1. Ensemble (20) de deux câbles d'acier (14) et d'un tissu tubulaire (200) pour le raccordement desdits câbles d'acier (14) à deux extrémités de raccordement,
lesdits câbles d'acier (14) étant un câble d'acier multicouche comprenant un noyau et au moins une couche et éventuellement un filament d'enveloppement (24, 34), **caractérisé en ce que** ladite au moins une couche est absente aux deux extrémités de raccordement desdits câbles d'acier (14) sur une longueur totale L₂, ledit tissu tubulaire (200) étant positionné de façon à recouvrir au moins une partie de ladite longueur totale L₂, en évitant de ce fait une augmentation de diamètre des câbles d'acier (14) avec deux fois l'épaisseur de paroi du tissu tubulaire (200) sur la longueur L₂.

2. Ensemble (20) selon la revendication 1, dans lequel ledit tissu tubulaire (200) a une longueur particulière L₁ de 0,5 cm à 20 cm.

3. Ensemble (20) selon la revendication 2, dans lequel L₁ est inférieure ou égale à L₂.

4. Ensemble (20) selon la revendication 3, dans lequel ledit tissu tubulaire (200) a une épaisseur de paroi δ et dans lequel ladite au moins une couche comporte des filaments ayant un diamètre maximum d_{I}, l'absence de ladite au moins une couche ayant pour résultat une diminution d'épaisseur de 2 x d_{I}, sur une longueur L₂, le positionnement dudit tissu tubulaire (200) ayant pour résultat une augmentation d'épaisseur de 2 x δ sur une longueur L₁, l'effet global étant 2 x δ - 2 x d_{I} sur une longueur L₁.

5. Ensemble (20) selon la revendication 4, dans lequel 2 x δ - 2 x d_{I} est positif.

6. Ensemble (20) selon la revendication 4, dans lequel 2 x δ - 2 x d_{I} est négatif.

7. Ensemble (20) selon la revendication 1, dans lequel ledit câble d'acier multicouche (14) comprend un noyau et une couche interne torsadée autour du noyau et en outre une couche externe torsadée autour de ladite couche interne, puis le filament d'enveloppement (24, 34).

8. Ensemble (20) selon la revendication 7, dans lequel ledit câble d'acier multicouche (14) comprend un noyau de trois filaments et une couche interne de neuf filaments torsadée autour du noyau et en outre une couche externe de quinze filaments torsadée autour, puis un filament d'enveloppement supplémentaire.

9. Ensemble (20) selon la revendication 7, dans lequel ledit câble d'acier multicouche (14) comprend un noyau d'un seul filament et une couche interne de six filaments torsadée autour du noyau et en outre une couche externe de douze filaments torsadée autour, puis un filament d'enveloppement supplémentaire (24, 34).

10. Ensemble (20) selon la revendication 7, dans lequel la couche externe ou la couche externe ainsi que le filament d'enveloppement est/sont éliminés aux deux extrémités de raccordement.

11. Ensemble (20) selon la revendication 7, dans lequel la couche interne ou le noyau ainsi que la couche interne est/sont éliminés aux deux extrémités de raccordement.

12. Ensemble (20) selon la revendication 10 ou 11, dans lequel les filaments restants de chaque extrémité de raccordement peuvent être chauffés par une résistance électrique et surtorsadés les uns avec les autres.

13. Ensemble (20) selon l'une quelconque des revendications 1 à 12, dans lequel les deux extrémités dudit tissu tubulaire sont soudées aux filaments extérieurs des câbles d'acier.

14. Procédé de raccordement de deux câbles d'acier multicouche (14) à deux extrémités de raccordement au moyen d'un tissu tubulaire (200), ledit procédé comprenant les étapes qui consistent à :
- éliminer au moins une couche aux deux extrémités de raccordement des deux câbles d'acier ;
- chauffer les filaments restants et surtorsader lesdits filaments restants les uns avec les autres ;
- raccorder les deux extrémités au moyen d'un tissu tubulaire.

15. Procédé selon la revendication 14, dans lequel ledit chauffage des filaments restants est réalisé au moyen d'un chauffage par une résistance électrique.

16. Procédé selon la revendication 14, ledit procédé comprenant en plus l'étape qui consiste à :
- envelopper l'ensemble raccordé au moyen d'un filament d'enveloppement (24, 34) en évitant de ce fait un enveloppement par-dessus le tissu tubulaire.
